# EUROPEAN PATENT SPECIFICATION

(11) **EP 1 356 627 B1**
(45) Date of publication and mention of the grant of the patent: **09.04.2008**
(21) Application number: 02702261.5
(22) Date of filing: 14.01.2002
(51) Int. Cl.: H04L 9/06

(54) **METHOD AND SYSTEM FOR THE ENCRYPTION OF DATA**
VERFAHREN UND SYSTEM ZUR DATENVERSCHLÜSSELUNG
PROCEDE ET SYSTEME DE CRYPTAGE DE DONNEES

(30) Priority: 19.01.2001 NL 1017151
(43) Date of publication of application: 29.10.2003
(73) Proprietor: Koninklijke KPN N.V., 9726 AE Groningen (NL)
(72) Inventor: MULLER, Frank, NL-2611 TB Delft (NL); ROELOFSEN, Gerrit, NL-2331 AH Leiden (NL); PRINS, Sharon, Christie, Lesley, NL-9725 LC Groningen (NL)
(74) Representative: Wuyts, Koenraad Maria
(86) International application number: PCT/EP2002/000279
(87) International publication number: WO 2002/062010

(56) References cited:
- WO-A-00/60807
- GOUBIN L ET AL: "DES AND DIFFERENTIAL POWER ANALYSIS THE DUPLICATION METHOD" CRYPTOGRAPHIC HARDWARE AND EMBEDDED SYSTEMS. INTERNATIONAL WORKSHOP, XX, XX, August 1999 (1999-08), pages 158-172, XP000952192

## Description

### BACKGROUND

The invention relates to a method for the encryption of a datastream, comprising the steps:
- the datastream is logically combined with a secret key or data derived therefrom;
- the resulting datastream is processed in an S-box in which the offered datastream is converted in a manner that cannot be predicted outside the system.

The invention also relates to a system for the encryption of the datastream, comprising a combination device in which the datastream is logically combined with a secret key or data derived therefrom and an S-box in which the datastream processed by the combination device is converted in an unpredictable manner.

An S-Box (in full: substitution box) can comprise a table in which, starting from the input values, output values are looked up and outputted with the aid of indexes. S-Boxes create an unpredictable relationship between the input and output of an encryption module.

The drawback of the known method and the known system is that the secret key can be discovered with the aid of an attack that is known as "Differential Power Analysis", see e.g. reference 1: "DES and differential power analysis; the Duplication method". Naturally, the cryptographic key must remain secret, since its possession could enable, for example if the encryption process was performed in a GSM chipcard, telephone calls to be made via the GSM network at another person's expense.

An earlier patent application, WO200060807 (reference 2), discloses a method and means to make attacks far more difficult by keeping the operative part of the S-Box secret from potential attackers. A variant of the attack is however still possible and will be further described under "Implementation".

### THE INVENTION

The invention proposes an improved method for the encryption of a datastream wherein the steps in which the datastream is combined with a secret key and the resulting datastream is converted unpredictably in an S-box are preceded by a step in which the datastream is first converted in an extra, "initial S-box" in a manner that is unpredictable for an attacker and only thereafter combined with the secret key.

The encryption system - comprising a combination device in which the datastream is combined with the key, and an S-box in which the datastream is subsequently converted unpredictably - comprises according to the invention an initial S-box in which the datastream fed to the system is converted in an unpredictable manner and subsequently offered to the combination device.

The invention will now be explained with reference to an embodiment, preceded by a more detailed explanation of the attack against which the method and the system according to the invention offer a solution.

### IMPLEMENTATION

### The attack

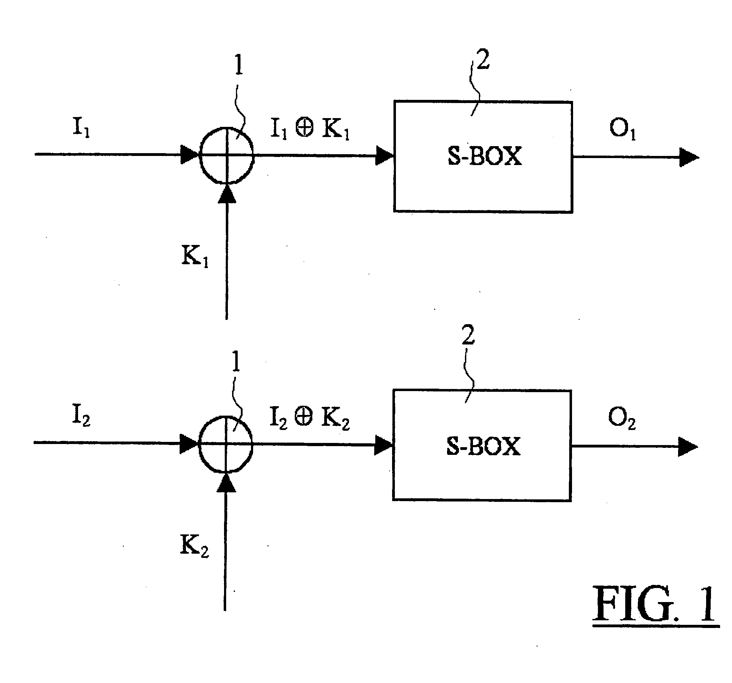

Figure 1 shows a "state-or-the-art" system for the encryption of the datastream I, comprising a combination device 1 in which the datastream is combined logically with a secret key K (i.e. modulo 2 addition, represented in the rest of the text by "I +|MOD 2| K"; represented in the figures by ⊕) and an S-box 2 in which the datastream processed by the combination device 1 is converted in an unpredictable manner to an output datastream O. The figure shows the (known) system twice. In the first case, the combination device 1 adds a data element I₁ modulo 2 to a key element K₁ and the S-box 2 subsequently converts the result to an output datastream O₁. (All elements of the datastream are, for example, 1 byte large.) In the second case, the combination device 1 adds a data element I₂ modulo 2 to a key element K₂ and the S-box 2 subsequently converts the result to an output datastream O₂.

In the event of an attack, which a system as illustrated in figure 1 cannot resist, the attacker keeps manipulating the first datastream input I₁ and the second datastream input I₂ until the first input I₁ combined - in the combination device 1 - with the first part of the secret key material K₁ is equal to the second input I₂ combined with the second part of the key material K₂. From the current consumption of the system during the look-up in the table of the S-box 2, the attacker can deduce whether he managed to make I₁ +|MOD 2| K₁ identical to I₂ +|MOD 2| K₂, since in this case the same value would be looked up twice in the S-Box; O₁ is equal to O₂. The same current consumption would then be shown twice. If the method was unsuccessful, the current consumption would show random values. The attacker still does not know the absolute values of K₁ and K₂, but only their difference, since: I₁ +|MOD 2| K₁ = I₂ +|MOD 2| K₂, so K₁ +|MOD 2| K₂ = I₁ +|MOD 2| I₂. But if the attacker is able, after a number of these attacks, to determine the difference between all n succeeding key bytes K₁ and K₂, K₂ and Kg, _ Kₙ₋₁ and Kₙ, all he needs to do is to "guess" the first byte and the rest follows automatically. This reduces the amount of work dramatically from an average of 2^{8*n-1} to an average of 2⁷ + (n-1) * 2⁷ possibilities. So if n is for example equal to 16 (which is a customary value), the attacker only needs to try out 2048 possibilities instead of 1.7 * 10³⁸ in order to discover the key.

### The security

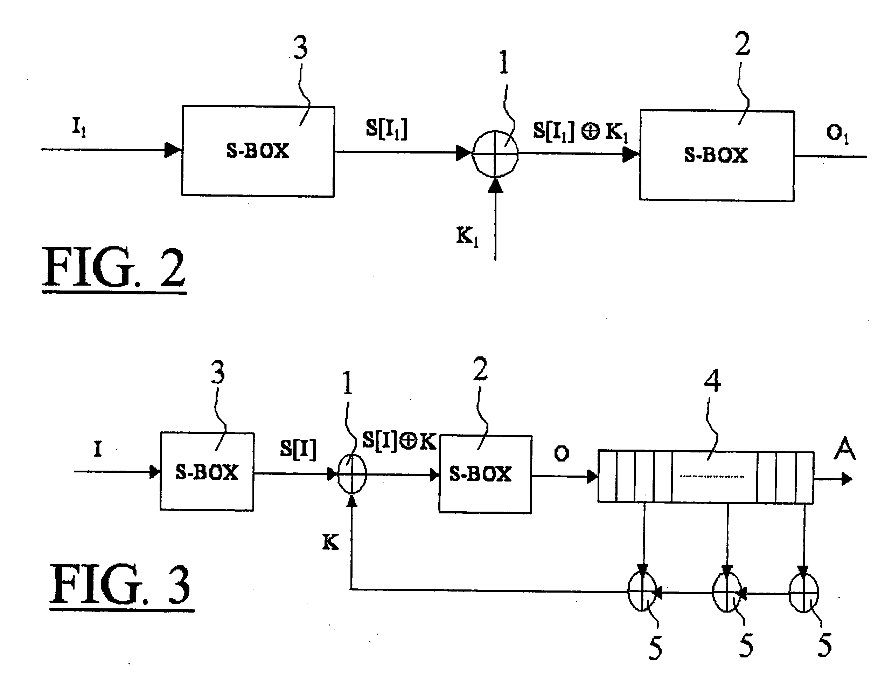

The invention solves this security problem by not combining the input I directly with the key material K, but by using the input first as index for an initial S-Box 3. This eliminates the influence that the attacker can exercise on the input for the EXOR operation in the combination device 1 with the key material K and thus on the input for the S-Box 2. Figure 2 shows this schematically. The datastream I is, before being offered to the combination device 1, first fed to the initial S-box 3. The output of this S-Box 3 is represented by S3[I]. After the EXOR operation (modulo-2 addition) of S3[I] and K, the result is S3[I] +|MOD 2| K. Unpredictable processing in S-box 2 results in an output datastream 0 = S2[S3[I] +|MOD 2| K]. By adding the initial S-box 3 in front of the combination device 1, the input of the S-Box 2 is screened from attackers and can therefore no longer be manipulated, which prevents attackers from discovering the secret key by varying the input data and simultaneously analysing the current consumption. It is important to keep the contents of S-Box 3 secret from the attacker, otherwise he could still manipulate I such that the above described attack would still be possible. With a secret S-Box, which can be achieved with the aid of the invention described in [2], the values of S[I] are unknown to the attacker, even if the values of I are known.

Another embodiment is shown in figure 3. In this figure, O (the output of the second S-Box 2) is again the input for a feedback shift register 4. It is customary to initially load the secret key in this shift register. A is the final result of the encryption system and is, for example, a value by which a party can authenticate itself by means of a "challenge & response" method. I is in this case a data series that is sent by the verifying party as "challenge" to a user who has to authenticate himself. The verifying party subsequently compares the "response" A of the encryption system of the user with the "response" (A') generated by an identical encryption system at the verifying party. If A and A' are identical, the user is authenticated.

### REFERENCES

[1] Goubin L; Patarin J, DES and differential power analysis; the "Duplication" method Cryptographic Hardware and Embedded Systems. First International Workshop, ChES'99. Proceedings (Lecture Notes in Computer Science Volume 1717), pp. 158-172, Published: Berlin, Germany, 1999, 352 pp
[2] WO-A1-200060807, applicant Koninklijke KPN n.v.

## Claims

1. Method for the encryption of a datastream, comprising the steps:
a. the datastream is logically combined (1) with a secret key or with a datastream dependent thereon;
b. the datastream resulting from the previous step is processed in an S-box (2) in which the datastream offered to the input is converted in an unpredictable manner, **characterised by** the step that
c. the datastream, prior to the logical combination with the secret key or a datastream dependent thereon, is processed in an initial S-box (3), in which the datastream (I₁) offered to the input is converted in an unpredictable manner.

2. System for the encryption of the datastream, comprising a combination device (1) in which the datastream is logically combined with a secret key or with a datastream dependent thereon, as well as an S-box (2) in which the datastream outputted by the combination device is converted in an unpredictable manner, **characterised by** an initial S-box (3) for the conversion in an unpredictable manner of the datastream (I) fed to the system, wherein the datastream (S[I]) converted by the initial S-box is offered to the input of the said combination device.

## Patentansprüche

1. Verfahren für die Verschlüsselung eines Datenstroms, umfassend die Schritte:
a.) logisches Kombinieren (1) des Datenstroms mit einem geheimen Schlüssel oder mit einem davon abhängigen Datenstrom;
b.) Verarbeiten des aus dem vorhergehenden Schritt erhaltenen Datenstroms in einer S-Box (2), in der der dem Eingang vorgelegte Datenstrom in unvorhersehbarer Weise gewandelt wird, **gekennzeichnet durch** den Schritt, dass
c.) der Datenstrom vor der logischen Kombination mit dem geheimen Schlüssel oder einem davon abhängigen Datenstrom in einer initialen S-Box (3) verarbeitet wird, in welcher der dem Eingang vorgelegte Datenstrom in unvorhersehbarer Weise gewandelt wird.

2. System für die Verschlüsselung eines Datenstroms, umfassend sowohl eine Kombinationseinrichtung (1), in der der Datenstrom mit einem geheimen Schlüssel oder mit einem davon abhängigen Datenstrom logisch kombiniert wird, als auch eine S-Box (2), in der der von der Kombinationseinrichtung ausgegebene Datenstrom in unvorhersehbarer Weise gewandelt wird, **gekennzeichnet durch** eine initiale S-Box (3) für die Wandlung des dem System zugeführten Datenstroms (I) in unvorhersehbarer Weise, wobei der von der initialen S-Box gewandelte Datenstrom (S[I]) dem Eingang der besagten Kombinationseinrichtung vorgelegt wird.

## Revendications

1. Procédé pour le cryptage d'un flux de données, comprenant les étapes consistant en ce que :
a. le flux de données est combiné logiquement (1) avec une clé secrète ou avec un flux de données qui en dépend ;
b. le flux de données résultant de l'étape précédente est traité dans une boîte S (2) dans laquelle le flux de données appliqué sur l'entrée est converti d'une manière non prédictible, **caractérisé par** l'étape consistant en ce que :
c. le flux de données, avant la combinaison logique avec la clé secrète ou avec un flux de données qui en dépend, est traité dans une boîte S initiale (3) dans laquelle le flux de données (l₁) appliqué sur l'entrée est converti d'une manière non prédictible.

2. Système pour le cryptage d'un flux de données, comprenant un dispositif de combinaison (1) dans lequel le flux de données est combiné logiquement avec une clé secrète ou avec un flux de données qui en dépend, de même qu'une boîte S (2) dans laquelle le flux de données émis en sortie par le dispositif de combinaison est converti d'une manière non prédictible, **caractérisé par** une boîte S initiale (3) pour la conversion d'une manière non prédictible du flux de données (I) fourni au système, dans lequel le flux de données (S[I]) converti par la boîte S initiale est appliqué sur l'entrée dudit dispositif de combinaison.
